# EUROPÄISCHE PATENTANMELDUNG

(11) **EP 0 735 283 A2**
(43) Veröffentlichungstag der Anmeldung: **02.10.1996**
(21) Anmeldenummer: 96109881.1
(22) Anmeldetag: 11.07.1994
(51) Int. Cl.: F16B 5/06, F16B 5/12, B60R 13/02

(54) **Verbindungselement**

(30) Priorität: 06.09.1993 DE 4330102
(62) Teilanmeldung aus: 94110755.9
(71) Anmelder: TRW United-Carr GmbH & Co. KG, D-67677 Enkenbach-Alsenborn (DE)
(72) Erfinder: Kraus, Willibald, 67269 Grünstadt (DE)
(74) Vertreter: Eder, Thomas, Dr.-Ing.

(57) **Zusammenfassung**

Die Erfindung betrifft ein Verbindungselement, insbesondere zur Montage von Türverkleidungen von Kraftfahrzeugen, bestehend aus einem ersten Element (3) mit einem Ankerfuß (7) zur Montage des ersten Elementes (3) in einem ersten der zu verbindenden Teile, einem an einem zweiten der zu verbindenden Teile angeordneten zweiten Element (5) und einem das erste und zweite Element (3, 5) verbindenden dritten Element (33), wobei das erste und dritte Element (3, 33) mittels jeweils mehrerer erster und zweiter Rastrippen (13, 35) derart miteinander verbindbar sind, daß bei der Verbindung des ersten und zweiten Teils ein Ausgleich von Toleranzen in Richtung der Längsachse des Verbindungsteils (1) erfolgen kann und wobei das zweite und dritte Element (5, 33) durch eine translatorische Bewegung in einer Ebene senkrecht zur Längsachse des Verbindungselements in Eingriff bringbar sind und das erste Element (3) ein im Querschnitt kreisförmig ausgebildetes Kopfteil (11) besitzt, an dessen äußerem Umfang die ersten Rastrippen (13) vorgesehen sind, welche mit den an der Innenseite einer sich im wesentlichen in Richtung der Längsachse des Verbindungselements (1) erstreckenden Wandung des dritten Elements (33) vorgesehenen zweiten Rastrippen (35) zusammenwirken oder das erste Element (3) eine sich im wesentlichen in Richtung der Längsachse des Verbindungselements (1) erstreckende Wandung (53) besitzt, an deren Innenseite die ersten Rastrippen (13) vorgesehen sind, welche mit den am äußeren Umfang eines am dritten Element (33) vorgesehenen im Querschnitt kreisförmig ausgebildeten Kopfteils (55) vorgesehenen zweiten Rastrippen (35) zusammenwirken.

## Beschreibung

Die Erfindung betrifft ein Verbindungselement, insbesondere zur Montage von Türverkleidungen von Kraftfahrzeugen.

Bekannte Verbindungselemente sind üblicherweise als einfacher Clip ausgebildet, der am zu befestigenden Teil angeordnet wird, wobei der Clip beispielsweise mittels einer in seinem vorderen Bereich vorgesehenen Rastnase in eine Ausnehmung oder Bohrung in einem Trägerteil eingedrückt werden kann.

Derartige Verbindungselemente haben jedoch den Nachteil, daß eine Demontage häufig mit einer Zerstörung des Clips verbunden ist, da die Rastnase wegen der bei einem Fahrzeug auftretenden Vibrationen und Stöße so ausgebildet sein muß, daß ein unbeabsichtigtes Lösen des Verbindungselements ausgeschlossen ist.

Des weiteren haben derartige Verbindungselemente den Nachteil, daß ein Ausgleich von Fertigungstoleranzen kaum oder nur in sehr engen Grenzen möglich ist. Dabei sind insbesondere Toleranzen in der Längsachse der Verbindungselemente mit bekannten Elementen nicht auszugleichen.

Der Erfindung liegt daher die Aufgabe zugrunde, ein Verbindungselement, insbesondere zur Montage von Türverkleidungen in Kraftfahrzeugen, zu schaffen, welches den mehrachsigen Ausgleich von Toleranzen ermöglicht und welches eine zerstörungsfreie Demontage der zu verbindenden Teile erlaubt.

Die Erfindung löst diese Aufgabe mit den Merkmalen des Patentanspruchs 1.

Durch das erfindungsgemäße dreiteilige Verbindungselement wird ein axialer Toleranzausgleich durch die Verwendung variabel rastbarer erster und dritter Elemente sichergestellt, wobei das dritte Element als Zwischenstück zwischen dem ersten und zweiten Element ausgebildet ist.

Hierdurch ergibt sich der Vorteil, daß durch die Verwendung ein- und desselben ersten Elements unterschiedlich langer Zwischenstücke, d.h. dritter Elemente, verschieden lange Verbindungselemente hergestellt werden können.

In einer bevorzugten Ausführungsform dieses dreiteiligen Verbindungselements sind die Rastrippen so am ersten und dritten Element vorgesehen, daß die Rastrippen des ersten und dritten Elements durch ein Verdrehen der Elemente um einen vorbestimmten Winkel außer Eingriff bringbar sind und die Elemente durch ein axiales Ziehen demontiert werden können.

In einer Weiterbildung dieser Ausführungsform weist das dritte Element einen Hals sowie ein Fußteil auf, welches in ein als taschenförmiger Retainer mit stirnseitiger Ausnehmung ausgebildetes zweites Element einschiebbar ist. Dabei ist die lichte Weite der Ausnehmung vorzugsweise größer dimensioniert als der Durchmesser des Halses.

Hierdurch ergibt sich der Vorteil, daß neben einem axialen Toleranzausgleich auch ein Toleranzausgleich in einer Ebene senkrecht zur Längsachse möglich ist.

Wird die Einschubrichtung des dritten Elements in den Retainer senkrecht zur längeren Seite des rechteckförmigen Kopfteils des ersten Elements gewählt, so wird ein jeweils von der anderen Achse unabhängiger Toleranzausgleich in allen drei translatorischen Achsen gewährleistet.

In einer anderen dreiteiligen Ausführungsform der Erfindung weist das dritte Element ein Fußteil auf, welches ein als T-Profil ausgebildetes zweites Element hintergreift.

Auch hierdurch ergibt sich der Vorteil, daß ein jeweils von der anderen Achse unabhängiger Toleranzausgleich in allen drei translatorischen Achsen gewährleistet wird, vorausgesetzt, die Verschieberichtung des Fußteils auf dem T-Profil wird senkrecht zur Verschieberichtung des rechteckförmigen Kopfteils des ersten Elements in der Wandung des dritten Elements gewählt.

In einer weiteren Ausbildung der Erfindung ist der Ankerfuß schwimmend mit dem ersten Element des Verbindungsteils verbunden. Dabei kann die schwimmende Verbindung in der Weise erreicht werden, daß der Ankerfuß mittels mehrerer, zumindest in einer Ebene senkrecht zur Längsachse des Verbindungselements federnder Stege verbunden ist. Hierzu kann der Ankerfuß vorzugsweise mit mehreren, von der Innenwandung einer im ersten Element vorgesehenen Bohrung ausgehenden Stegen verbunden sein.

Hierdurch ergibt sich der Vorteil, daß ein weiterer Ausgleich von Toleranzen zumindest in einer zur Längsachse des Verbindungselements senkrechten Ebene ermöglicht wird, so daß mittels diesem Verbindungselement ein Toleranzausgleich in allen drei translatorischen Achsen gewährleistet ist.

Darüber hinaus ermöglicht der schwimmend aufgehängte Ankerfuß auch eine Kippbewegung des Ankerfußes relativ zur Achse des Verbindungselements, so daß in jedem Fall sichergestellt ist, daß der Ankerfuß auch in eine leicht schräg verlaufende Ausnehmung eingesetzt werden kann. Zudem wird hierdurch gewährleistet, daß der üblicherweise oberhalb des Ankerfußes auch zu Dichtzwecken angeordnete Teller plan auf der Oberfläche des Teils anliegt, in welches das erste Element eingesetzt wird.

Weitere Ausführungsbeispiele der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: perspektivische Ansichten einer Ausführungsform eines erfindungsgemäßen Verbindungselements;
- Fig. 2: eine Seitenansicht des Verbindungselements nach Fig. 1 in montiertem Zustand;
- Fig. 3: eine Aufsicht auf das dritte Element des Verbindungselements nach Fig. 1 und
- Fig. 4: eine Aufsicht auf das erste Element des Verbindungselements nach Fig. 1.

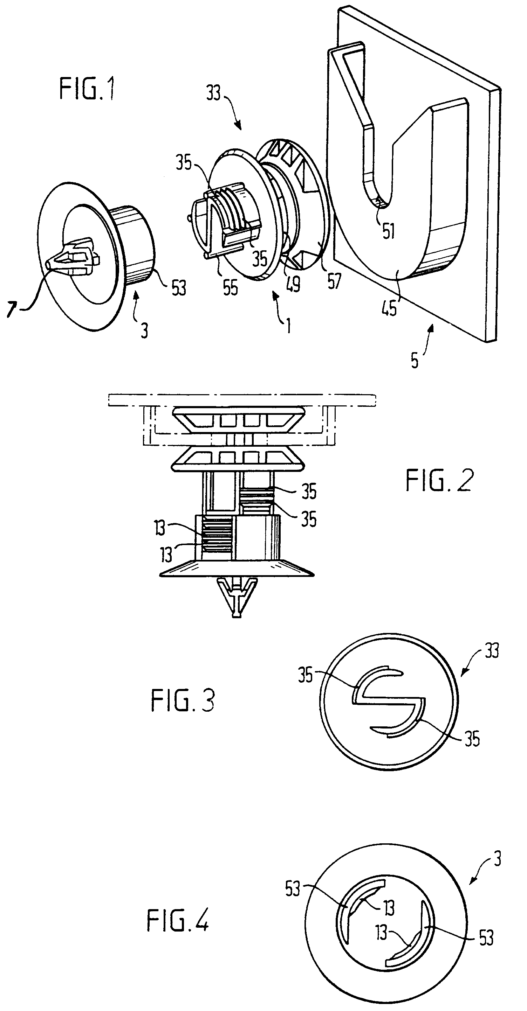

Fig. 1 zeigt eine Ausführungsform des Verbindungselements nach der Erfindung.

Das Verbindungselement 1 umfaßt ein erstes Element 3, das z.B. einen Ankerfuß 7 besitzt, an dem ein Federteller vorgesehen ist, der zur zumindest in axialer Richtung im wesentlichen spielfreien Montage und Halterung des ersten Elements 3 mittels des Ankerfußes 7 in einem ersten der zu verbindenden Teile (nicht dargestellt) dient. Der Ankerfuß wird dabei, wie üblich, beispielsweise in eine Ausnehmung an der Innenseite einer Fahrzeugtür eingesetzt und verrastet. Das erste Element 3 weist weiterhin eine sich in Richtung der Achse des Verbindungselements erstreckende, zweiteilige Wandung 53 auf (Fig. 4). An den Innenseiten dieser Wandung 53 sind mehrere Rastnasen 13 vorgesehen, welche mit Rastnasen 35 zusammenwirken, die am äußeren Umfang eines Kopfteils 55 des dritten Elements 33 angeordnet sind.

Dieses Kopfteil 55 ist durch eine sich axial erstreckende, im wesentlichen S-förmige Wandung gebildet (Fig. 3), wobei sich die Rastnasen 35 an den Außenseiten der "S-Bäuche" befinden. Es sind auch Ausführungsformen mit umgekehrt S-, mit Z- bzw. mit W-Formen denkbar, an deren Wandungen sich die Rastnasen 35 befinden.

Da die Rastnasen 13 des ersten Elements 3 nicht über den gesamten Verlauf der Wandung 53 ausgebildet sind, ergibt sich der Vorteil, daß die Ausführungsform gemäß den Fig. 1 bis 4 eine Demontage des ersten und dritten Teils durch eine Verdrehung dieser Teile um einen vorbestimmten Winkel ermöglicht, da hierdurch die Rastnasen 13 und 35 außer Eingriff gebracht werden. Nach diesem Außereingriffbringen können die ersten und dritten Teile durch Aufbringen einer axialen Zugkraft von einander getrennt werden.

Der S-förmige Verlauf der Wandung des Kopfteils 55 hat dabei die Wirkung, daß die "S-Bäuche" durch den sie verbindenden Wandabschnitt stabilisiert werden, d.h., die Federwirkung der Wandung in radialer Richtung wird bei gleicher Wanddicke härter.

Die Verbindung des dritten Elements 33 mit dem zweiten Element 5 erfolgt durch die Aufnahme eines tellerförmigen Fußes 57 des dritten Elements 33 in einem taschenförmigen Retainer des zweiten Elements 5. Hierzu ist der Fuß 57 über einen Hals 49 mit dem dritten Element 33 verbunden. Der Hals 49 und der Retainer 45 mit seiner Ausnehmung 51 sind vorzugsweise so dimensioniert, daß ein Toleranzausgleich in der Ebene senkrecht zur Längsachse des Verbindungselements ermöglicht wird.

Damit gewährleistet auch diese Ausführungsform der Erfindung einen Toleranzausgleich in allen drei translatorischen Achsen.

Die Erfindung ist jedoch nicht auf die vorstehend erläuterten Ausführungsbeispiele beschränkt, sondern umfaßt selbstverständlich z.B. auch alle andere Kombinationen der dargestellten Verbindungsmöglichkeiten zwischen den ersten, zweiten und dritten Elementen. So können z.B. statt eines Ankerfußes 7 auch andere Halterungselemente, wie T-Bolzen, Sägezahnbolzen, Elemente für Formausparungen Anwendung finden.

## Patentansprüche

1. Verbindungselement, insbesondere zur Montage von Türverkleidungen von Kraftfahrzeugen, bestehend aus
einem ersten Element (3) mit einem Ankerfuß (7) zur Montage des ersten Elementes (3) in einem ersten Teil,
einem an einem mit dem ersten Teil (3) zu verbindenden zweiten Teil angeordneten zweiten Element (5) und
einem das erste und zweite Element (3, 5) verbindenden dritten Element (33),
wobei das erste und dritte Element (3, 33) mittels jeweils mehrerer erster und zweiter Rastrippen (13, 35) derart miteinander verbindbar sind, daß bei der Verbindung des ersten Teils mit dem zweiten Teil ein Ausgleich von Toleranzen in Richtung der Längsachse des Verbindungsteils (1) erfolgen kann und
**dadurch gekennzeichnet**,
daß das zweite und dritte Element (5, 33) durch eine translatorische Bewegung in einer Ebene senkrecht zur Längsachse des Verbindungselements (1) in Eingriff bringbar sind und
daß das erste Element (3) ein im Querschnitt kreisförmig ausgebildetes Kopfteil (11) besitzt, an dessen äußerem Umfang die ersten Rastrippen (13) vorgesehen sind, welche mit den an der Innenseite einer sich im wesentlichen in Richtung der Längsachse des Verbindungselements (1) erstreckenden Wandung des dritten Elements (33) vorgesehenen zweiten Rastrippen (35) zusammenwirken oder
daß das erste Element (3) eine sich im wesentlichen in Richtung der Längsachse des Verbindungselements (1) erstreckende Wandung (53) besitzt, an deren Innenseite die ersten Rastrippen (13) vorgesehen sind, welche mit den am äußeren Umfang eines am dritten Element (33) vorgesehenen im Querschnitt kreisförmig ausgebildeten Kopfteils (55) vorgesehenen zweiten Rastrippen (35) zusammenwirken.

2. Verbindungselement nach Anspruch 1, **dadurch gekennzeichnet**, daß die Rastrippen (13, 35) des ersten und dritten Elements (3, 33) so über den Umfang der Innenwandung und den Umfang des Kopfteils angeordnet sind, daß die ersten und dritten Elemente (3, 33) durch eine Drehung um einen vorbestimmten Winkel außer Eingriff bringbar sind.

3. Verbindungselement nach Anspruch 1 oder 2, **dadurch gekennzeichnet**, daß die Wandung (53, 37) des ersten oder dritten Elements (3, 33) zweiteilig ausgebildet ist.

4. Verbindungselement nach einem der Ansprüche 1 bis 3, **dadurch gekennzeichnet**, daß das zweite Element als taschenförmiger Retainer (45) mit einer stirnseitigen Ausnehmung (51) ausgebildet ist und daß das dritte Element (33) einen Hals (49) und einen damit verbundenen Fuß (47, 57) aufweist, welcher in den Retainer (45) einschiebbar ist, wobei der Hals (49) in die Ausnehmung (51) des Retainers (49) des zweiten Elements (5) eingreift.

5. Verbindungselement nach Anspruch 4, **dadurch gekennzeichnet**, daß die lichte Weite der Ausnehmung (51) des Retainers (45) des zweiten Elements (5) größer ist, als der Durchmesser des Halses (49).

6. Verbindungselement nach einem der Ansprüche 1 bis 3, **dadurch gekennzeichnet**, daß das zweite Element ein T-Profil (43) aufweist, auf welches ein das T-Profil (43) hintergreifender Fuß (39) des dritten Teils (33) aufschiebbar ist.

7. Verbindungselement nach einem der Ansprüche 1 bis 6, **dadurch gekennzeichnet**, daß der Ankerfuß (7) mittels einem oder mehrerer zumindest in einer Ebene senkrecht zur Längsachse des Verbindungselements (1) federnder Stege (25) mit dem ersten Element (3) verbunden ist.

8. Verbindungselement nach Anspruch 7, **dadurch gekennzeichnet**, daß das erste Element (3) eine axiale Bohrung aufweist und die Stege (25) zwischen der Innenwandung und einem Fortsatz (23) des Ankerfußes (7) angeordnet sind.
